# EUROPÄISCHE PATENTSCHRIFT

(11) **EP 2 842 631 B1**
(45) Veröffentlichungstag und Bekanntmachung des Hinweises auf die Patenterteilung: **06.06.2018**
(21) Anmeldenummer: 14179857.9
(22) Anmeldetag: 05.08.2014
(51) Int. Cl.: B04B 5/00, B04B 11/04

(54) **FILTRATIONSVORRICHTUNG**
FILTRATION DEVICE
DISPOSITIF DE FILTRATION

(30) Priorität: 23.08.2013 GB 201315140
(43) Veröffentlichungstag der Anmeldung: 04.03.2015
(73) Patentinhaber: MANN+HUMMEL GmbH, 71636 Ludwigsburg (DE)
(72) Erfinder: Fell, Anthony W., Yeovil, Somerset BA21 3SE (GB); Foulkes, Nicholas, Chard, Somerset TA20 1JA (GB); Madden, Alfred, Liverpool, L4 1AE (GB); McGrail, Glen, Taunton, Somerset TA1 (GB); Nash, Robin, Huntworth, TA7 OAE (GB); Rouse, Angus, Leeds, LS7 3NN (GB)

(56) Entgegenhaltungen:
- GB-A- 2 465 374
- GB-A- 2 478 578
- US-A1- 2012 080 384
- US-B1- 6 261 455

## Beschreibung

### TECHNISCHES GEBIET

Diese Erfindung betrifft eine Filtrationsvorrichtung, und zwar insbesondere, aber nicht ausschließlich, einen Zentrifugalfilter, wobei dieser Begriff gelegentlich für einen flüssigkeitsbetriebenen Zentrifugalseparator einschließlich eines selbstangetriebenen flüssigkeitsbetriebenen Zentrifugalseparators benutzt wird.

### HINTERGRUND

Flüssigkeitsbetriebene Zentrifugalseparatoren sind für das Trennen von Flüssigkeiten unterschiedlicher Dichten oder zum Trennen von Partikeln aus Flüssigkeiten bereits bekannt, und sie werden seit langem in Schmiersystemen insbesondere bei dieselbetriebenen Fahrzeugmotoren (Kfz- und Schiffsmotoren) sowie in anderen industriellen Trennprozessen eingesetzt. Das Betriebsprinzip eines derartigen Separators ist, dass ein Gehäuse einen Rotor aufweist, der darin für die Drehung mit hoher Geschwindigkeit um eine im Wesentlichen vertikale Achse gelagert ist. Flüssigkeit wird mit hohem Druck entlang der Rotationsachse bereitgestellt und strömt durch Öffnungen in einem zentralen Rohr bzw. einer axialen Aushöhlung in die Rotorkammer.

Anschließend wird sie von tangential ausgerichteten Düsen in der Rotorbasis in das Gehäuse ausgestoßen, von wo sie in eine Wanne abfließt. In selbstangetriebenen Separatoren ist die Antriebsflüssigkeit für den Rotor die verschmutzte Flüssigkeit, die gereinigt werden soll. Beim Durchlauf der Flüssigkeit durch den Rotor werden dichtere kontaminierende Materialien oder Partikel daraus mit Zentrifugalkraft separiert und im Rotor zurückgehalten, und zwar normalerweise als Kruste auf der Rotorinnenfläche.

Der Rotor selbst ist normalerweise in zwei Teilen als obere glockenförmige Abdeckung (im Folgenden als Hauptgehäusekörper bezeichnet) und untere Basis ausgebildet. Bei älteren Anordnungen, beispielsweise entsprechend der Beschreibung in GB 2283694A, waren diese durch Falzverbindungen miteinander verbunden. Bei neueren im Handel erhältlichen Versionen von Zentrifugalseparatoren ist die Abdeckung per Gewinde mit der Basis verbunden und kann daher bei Wartungsvorgängen ab- und wieder angeschraubt werden. Angesichts dieses Umstands müssen im Inneren der Rotorkammer abgelagerte kontaminierte Restpartikel, die meistens an der Innenwand haften, wobei aber einige nicht gut haften oder frei in der Kammer liegen, in regelmäßigen Abständen entfernt werden. Dies kann beispielsweise bei Zentrifugalseparatoren in Kraftfahrzeugen ein- oder zweimal pro Jahr bei der Fahrzeugwartung erfolgen oder wesentlich öfter bei anderen industriellen Anwendungen von Zentrifugalseparatoren dieses selbstangetriebenen Typs. Ein Beispiel dieses Designkonzepts ist in der früheren Anmeldung GB 2465374A des gleichen Anmelders offengelegt. Ein alternatives Design, wobei die Abdeckung mittels einer Schnelllöseklemme an der Basis befestigt ist, wird in der früheren Anmeldung GB 2478578A des gleichen Anmelders offengelegt.

Bei einigen Gerätekonzepten ist es nunmehr wünschenswert, dass die Abdeckung, und zwar der Hauptgehäusekörper, in der Position verbleibt, während die Basis der Teil ist, der bei der Wartung abnehmbar ist. Ein Ziel dieser Erfindung ist die Verbesserung des Designs von Zentrifugalseparatoren für derartige Zwecke.

Eine Vorrichtung gemäß dem Oberbegriff des Anspruchs 1 ist aus US 6 621 455 B1 bekannt.

### KURZBESCHREIBUNG DER OFFENLEGUNG

Gemäß der Erfindung wird eine Filtervorrichtung gemäß Anspruch 1 bereitgestellt. Die als abnehmbares Verschlusselement ausgebildete Basis kann mit dem Hauptkörper des Gehäuses verbunden werden, indem sie in ein offenes Ende des Hauptgehäusekörpers eingesetzt wird, wobei der Kanal in diesem Fall um dessen externen Umfang herum ausgebildet wird. Bei alternativen Ausführungsformen kann die Basis mit dem Hauptkörper des Gehäuses verbunden werden, indem sie über einem offenen Ende des Hauptgehäusekörpers angeordnet wird, wobei der Kanal um den externen Umfang des abnehmbaren Verschlusselements herum ausgebildet wird. Bei beiden Versionen ist der abnehmbare Verschluss vorzugsweise über entsprechende oberhalb und unterhalb des Umfangskanals angeordnete O-Ring-Dichtungen am Hauptgehäusekörper abgedichtet.

Dieses Design ermöglicht größere Flexibilität als bisher, indem Flüssigkeit zum Filter aus der gleichen Richtung zugeführt wird, aus welcher bei der Wartung der Zugang zur Vorrichtung erfolgt; und es ermöglicht Probleme bei der Ausrichtung des Verschlusses relativ zum -Flüssigkeitseinlass bzw. -auslass, wenn das Verschlusselement entfernt und ersetzt wird. Das heißt, dass der Kanal die Fehlpositionierung bei der Rotation vermeidet, da es nicht mehr wichtig ist, wo die Flüssigkeit zugeführt wird oder wo sie aus der Vorrichtung austritt, da der Kanal den Flüssigkeitsstrom um den gesamten Umfang ermöglicht.

Die Erfindung wurde in Zusammenhang mit einem Zentrifugalseparator vorgestellt, wobei die Filtermittel im Gehäuse ein selbstangetriebener Rotor sind, der durch entgegengesetzte Zapfen in entsprechenden Lagergruppen gelagert ist, die im/am Hauptgehäusekörper und in/an der Basis bereitgestellt sind. In diesem Zusammenhang kann die im/am Hauptgehäusekörper bereitgestellte Lagergruppe innerhalb eines oberen Endes des Hauptgehäusekörpers angebracht sein, welches ein geschlossenes oberes Ende ist, sodass alle Wartungszugriffe über den abnehmbaren Verschluss erfolgen können.

Bei einigen Ausführungsformen der Erfindung können ein weiterer Flüssigkeitseinlassdurchgang und/oder ein weiterer Flüssigkeitsauslassdurchgang in einer Erweiterung des Hauptgehäusekörpers bereitgestellt sein, wobei dieser weitere Durchgang mit dem Kanal kommuniziert.

Selbstverständlich ist die Erfindung jedoch nicht auf das spezifische Gebiet der Zentrifugalseparatoren eingeschränkt, und sie kann in einem breiteren Rahmen bei anderen Arten von Filtervorrichtungen angewandt werden. Beispielsweise könnte die vorgeschlagene Konstruktion für beliebige Kartuschen-Filtersysteme eingesetzt werden, insbesondere für Hauptstrom-Ölfilter und Wechselfilter.

### KURZBESCHREIBUNG DER ZEICHNUNGEN

Die Erfindung wird weiter beispielhaft mit Bezug auf die beigefügten Zeichnungen beschrieben, die Folgendes zeigen:
- Fig. 1:: ist ein schematischer Längsschnitt einer praktischen Ausführungsform eines erfindungsgemäßen selbstangetriebenen Zentrifugalseparators; und
- Fig. 2a und 2b:: sind schematische Querschnittsdiagramme in Höhe des Kanals im Umfang der abnehmbaren Basis der in Fig. 1 dargestellten Ausführungsform.

### DETAILLIERTE BESCHREIBUNG

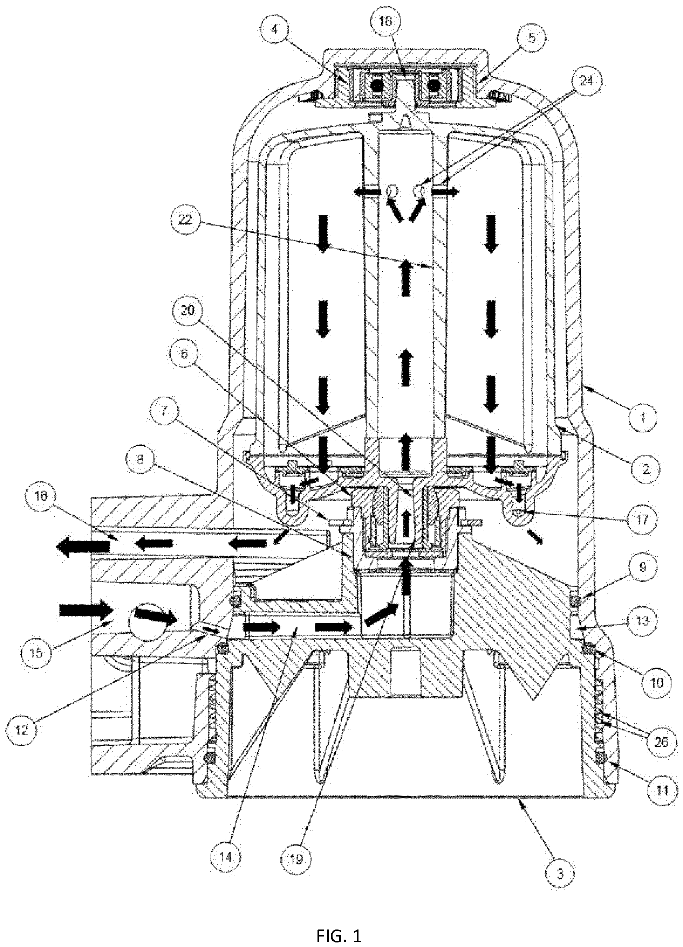

Entsprechend der Darstellung in Fig. 1 hat diese beispielhafte Ausführungsform die Merkmale eines selbstangetriebenen Zentrifugalseparators, d. h. einen mit einer Basis 3 verbundenen Zentrifugen-Hauptgehäusekörper 1. Eine obere Lagergruppe 4 ist starr in einem geschlossenen oberen Ende des Gehäusekörpers 1 befestigt und wird dort durch eine Gewindehülse 5 gehalten. Ein Rotor 2 ist innerhalb der Umhüllung angebracht, die durch den Gehäusekörper 1 bereitgestellt wird, und die obere Lagergruppe 4 ermöglicht die Rotation des Rotors 2, indem ein oberer Stift 18 des Rotors 2 drehbar gelagert wird. Das untere Ende des Rotors 2 hat einen unteren Stift 19 in Form eines Zapfens mit einer Axialbohrung 20. Dieser Zapfen 19 wird drehbar durch eine untere Lagergruppe 6 gelagert, die mittels Gewinde an einem Einsatz 8 angebracht ist, welcher an der Basis 3 befestigt und mit einem Sicherungsring 7 formschlüssig gehalten wird. Die Basis 3 hat die Form eines abnehmbaren Verschlusselements, das in das untere offene Ende des Zentrifugen-Gehäusekörpers 1 eingesetzt und in dieser Position über O-Ringe 9, 10 und 11 abgedichtet wird. Der Rotor 2 hat einen axialen Hohlraum 22 mit Öffnungen 24, wobei der Hohlraum 22 mit der Axialbohrung 20 im Zapfen 19 kommuniziert.

Die abnehmbare Basis 3 hat einen um ihren gesamten Umfang bereitgestellten ringförmigen Kanal 13 sowie einen Einlassdurchgang 14, der von einer Position in diesem Kanal 13 zu einer mit der Bohrung 20 im Zapfen 19 kommunizierenden axialen Position führt.

Der Gehäusekörper 1 ist seitlich in der Nähe seines unteren Endes mit einem Flüssigkeitseinlass 15 ausgestattet, der mit dem Flüssigkeits-Einlassdurchgang 12 kommuniziert. Er ist weiter mit einem Flüssigkeits-Auslassdurchgang 16 ausgestattet, der bei der dargestellten Ausführungsform oberhalb des Einlasses 15 und des Flüssigkeitseinlassdurchgangs 12 angeordnet ist.

Wenn die Basis 3 entsprechend der Darstellung am unteren Ende des Gehäusekörpers 1 positioniert ist, liegt der ringförmige Kanal 13 des Verschlusselements 3 in einer Position zwischen den beiden O-Ring-Dichtungen 9, 10, sodass er bezüglich einer Abflusskammer unterhalb des Rotors 2 abgedichtet ist. Der Gewindeeinsatz 26 zwischen der Basis 3 und dem Gehäusekörper 1 ist zwischen den O-Ring-Dichtungen 10 und 11 angeordnet.

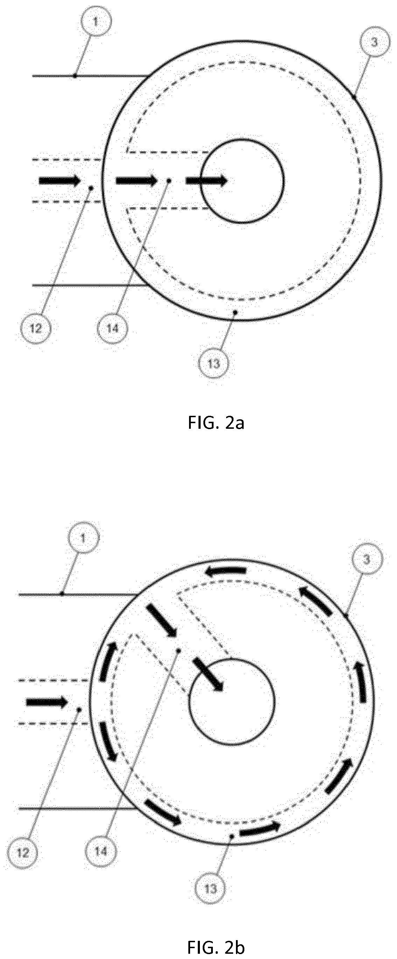

Im Betrieb wird mit Druck beaufschlagtes Arbeitsmedium am Einlass 15 zum Zentrifugen-Gehäusekörper 1 geführt. Von dort gelangt das Arbeitsmedium durch den Flussigkeitseinlassdurchgang 12 zum Kanal 13 in Basis 3. Dadurch, dass der Kanal 13 ringförmig ist, wird sichergestellt, dass das Arbeitsmedium ungeachtet der Drehrichtung des Verschlusselements 3 beim Zusammenbau durch die Basis 3 vom Verbindungsdurchgang 12 zum Einlassdurchgang 14 strömen kann. Dies ist in Fig. 2a und 2b dargestellt. In Fig. 2a ist die Basis 3 so eingepasst, dass der Einlassdurchgang 12 im Gehäusekörper 1 vollständig mit dem Einlassdurchgang 14 in Basis 3 ausgerichtet ist, sodass es daher bei einströmendem Arbeitsmedium zu keinem Richtungswechsel kommt. Dagegen ist in Fig. 2b die abnehmbare Basis 3 so dargestellt, dass sie in Drehrichtung versetzt in Bezug auf den Hauptgehäusekörper 1 eingepasst wurde, sodass der Einlassdurchgang im Gehäusekörper 1 nicht mit dem Einlassdurchgang 14 in Basis 3 ausgerichtet ist. Bei dieser Anordnung strömt das Arbeitsmedium vom ersten Einlassdurchgang 12 durch den ringförmigen Kanal 13 und daher teilweise außen um die Basis 3, um in den zweiten Einlasskanal 14 in Basis 3 einzutreten, bevor zum Eintritt in den Rotor 2 mit dem gleichen Pfad wie zuvor fortgefahren wird.

Der Strom des Arbeitsmediums wird somit durch den Einlassdurchgang 14, durch die Lagergruppe 8, 6 und in den Rotor 2 fortgesetzt. Flüssigkeit gelangt durch den Axialhohlraum 22 des Rotors 2 nach oben, durchströmt die Öffnungen 24 und kehrt entlang der Außenkammer des Rotors nach unten zurück, um durch die Düsen 17 in der Basis des Rotors 2 auszutreten. Da diese Düsen 17 tangential angeordnet sind, treibt der Druck des Arbeitsmediums bei dessen Austritt an den Düsen 17 den Rotor 2 an. Mit zunehmender Winkelgeschwindigkeit des Rotors 2 entwickelt sich Zentrifugalkraft, die Schmutzpartikel aus dem Arbeitsmedium im Rotor 2 trennt. Das Arbeitsmedium kehrt nach dem Verlassen des Rotors 2 über den Auslassdurchgang 16 zur Wanne zurück.

Während der Wartungseingriffe an der Zentrifuge wird die Basis 3 zusammen mit den O-Ringen 9, 10 und 11 und der unteren Anordnung von Lagerungen 6, 7 und 8, die an Basis 3 gehalten werden, abgenommen. Der Rotor 2 kann anschließend in der gleichen Abwärtsrichtung aus der Zentrifuge entfernt werden.

Dadurch, dass das Arbeitsmedium durch die abnehmbare Basis 3 und ohne eine Drehausrichtung zu erfordern zum Rotor 2 geführt werden kann, ist der oben beschriebene Zentrifugalseparator nicht mehr darauf eingeschränkt, Flüssigkeit zum Rotor 2 durch oder teilweise durch den Gehäusekörper 1 bereitzustellen. Dies bietet eine erhöhte Flexibilität bei der Anordnung des Zentrifugalseparators im Gesamtdesign der Vorrichtung und ermöglicht insbesondere die Zufuhr von Arbeitsmedium zum Rotor 2 aus der gleichen Richtung wie der Richtung, aus der die Zentrifuge gewartet wird, wodurch ein besserer Zugang zu den Einlassdurchgängen für das Arbeitsmedium ermöglicht wird.

Die Erfindung ist nicht auf die Details der vorstehend beschriebenen Ausführungsform beschränkt. Obwohl die Erfindung in Zusammenhang mit einem Zentrifugalseparator bzw. der Reinigung von Öl in einem Kraftfahrzeugmotor entwickelt wurde, könnte sie gleichermaßen bei einem beliebigen Bereich von Flüssigkeitssystemen eingesetzt werden, bei denen ein abnehmbarer Verschluss am Filtergehäuse bereitgestellt wird. Im Verlauf der Beschreibung und der Ansprüche dieser Spezifikation bedeuten die Begriffe "umfassen" und "enthalten" und Variationen davon "einschließlich, aber ohne diesbezügliche Einschränkung", und sie sollen den Ausschluss anderer Komponenten nicht beabsichtigen (und tun dies auch nicht). Im Verlauf der Beschreibung und der Ansprüche dieser Spezifikation umfasst die Singularform auch die Pluralform, sofern der Kontext nichts anderes erfordert. Insbesondere soll, wenn der unbestimmte Artikel verwendet wird, die Spezifikation so ausgelegt werden, dass sie Pluralität wie auch Singularität berücksichtigt, sofern der Kontext nichts anderes erfordert.

## Patentansprüche

1. Filtervorrichtung aufweisend ein Gehäuse mit einem an einer Basis (3) lösbar angebrachten Hauptgehäusekörper (1) zur Definition eines umschlossenen Raums, wobei Filtermittel (2) bereitgestellt sind, sowie mit einem in der Basis (3) bereitgestellten Flüssigkeitseinlassdurchgang (14) zu den Filtermitteln (2) und/oder einem Flüssigkeitsauslassdurchgang von den Filtermitteln, (2) wobei die Basis (3) als abnehmbares Verschlusselement des Gehäuses dient und einen um den gesamten externen Umfang verlaufenden Kanal (13) aufweist, wobei dieser Kanal einerseits mit einem Flüssigkeitseinlass (15) und/oder einem Flüssigkeitsauslass (16) des Gehäuses kommuniziert und wobei andererseits der dazugehörige Flüssigkeitseinlassdurchgang (14) bzw. Flüssigkeitsauslassdurchgang in der als abnehmbares Verschlusselement dienenden Basis (3) bereitgestellt ist, **dadurch gekennzeichnet, dass** die Basis (3) in ein offenes Ende des Hauptgehäusekörpers eingesetzt und mittels eines Gewindes (26) mit dem Hauptgehäusekörper verbunden ist.

2. Filtervorrichtung nach Anspruch 1, wobei die Basis (3) über entsprechende oberhalb und unterhalb des Umfangskanals angeordnete O-Ring-Dichtungen (9, 10) am Hauptgehäusekörper (1) abgedichtet ist.

3. Filtervorrichtung nach einem der vorstehenden Ansprüche, wobei die Filtermittel im Gehäuse ein selbstangetriebener Rotor (2) sind, der durch entgegengesetzte Zapfen (18, 19) in entsprechenden Lagergruppen (4, 6) gelagert ist, die im/am Hauptgehäusekörper (1) und an der Basis (3) mit abnehmbarem Verschluss bereitgestellt sind.

4. Filtervorrichtung nach Anspruch 3, wobei die im/am Hauptgehäusekörper (1) bereitgestellte Lagergruppe (4) innerhalb eines oberen Endes des Hauptgehäusekörpers (1), das ein geschlossenes oberes Ende ist, angebracht ist.

5. Filtervorrichtung nach einem der vorstehenden Ansprüche, wobei ein weiterer Flüssigkeitseinlassdurchgang bzw. ein weiterer Flüssigkeitsauslassdurchgang in einer Erweiterung des Hauptgehäusekörpers (1) bereitgestellt ist, wobei dieser weitere Durchgang mit dem Kanal (13) kommuniziert.

## Claims

1. Filtering device featuring a housing with a main housing body (1) detachably mounted on a base (3) for defining an enclosed space, wherein filter means (2) are provided, as well as with a liquid inlet passage (14) provided in the base (3) leading towards the filter means (2) and/or with a liquid outlet passage coming from the filter means (2), wherein the base (3) serves as detachable locking element of the housing and features a duct (13) extending around the complete external periphery, wherein this duct communicates on the one hand with a liquid inlet (15) and/or with a liquid outlet (16) of the housing and wherein on the other hand the corresponding liquid inlet passage (14) or the liquid outlet passage is provided in the base (3) serving as detachable locking element, **characterized in that** the base (3) is inserted into an open end of the main housing body and connected to the main housing body by means of a thread (26).

2. Filtering device according to claim 1, wherein the base (3) is sealed by means of corresponding O-ring seals (9, 10) disposed upstream and downstream of the circumferential channel at the main housing body (1).

3. Filtering device according to one of the above claims, wherein the filter means in the housing are a self-propelled rotor (2) which is supported by opposed pivots (18, 19) in corresponding bearing assemblies (4, 6) which are provided in/at the main housing body (1) and at the base (3) with detachable lock.

4. Filtering device according to claim 3, wherein the bearing assembly (4) provided in/at the main housing body (1) is mounted inside of an upper end of the main housing body (1) which is a closed upper end.

5. Filtering device according to one of the above claims, wherein another liquid inlet passage or another liquid outlet passage is provided in an extension of the main housing body (1), wherein this further passage communicates with the duct (13).

## Revendications

1. Dispositif à filtre présentant un boîtier avec un corps de boîtier principal (1) monté de manière amovible sur une base (3) pour définir un espace clos, des moyens de filtrage (2) étant mis à disposition, ainsi qu'avec un passage d'entrée de liquide (14) mis à disposition dans la base (3) menant vers les moyens de filtrage (2) et/ou avec un passage de sortie de liquide provenant des moyens de filtrage (2), la base (3) servant d'élément de fermeture amovible du boîtier et présentant un conduit (13) s'étendant sur toute la périphérie externe, ce conduit communiquant d'une part avec une entrée de liquide (15) et/ou avec une sortie de liquide (16) du boîtier et d'autre part le passage d'entrée de liquide (14) correspondant ou passage de sortie de liquide étant mis à disposition dans la base (3) servant d'élément de fermeture amovible, **caractérisé en ce que** la base (3) est insérée dans une extrémité ouverte du corps de boîtier principal et reliée au corps de boîtier principal au moyen d'un filetage (26).

2. Dispositif à filtre selon la revendication 1, la base (3) étant étanchée par des joints toriques d'étanchéité (9, 10) correspondants disposés en amont et en aval du canal périphérique sur le corps de boîtier principal (1).

3. Dispositif à filtre selon l'une des revendications précédentes, les moyens de filtrage dans le boîtier étant un rotor autopropulsé (2) qui est logé par des pivots (18, 19) opposés dans des ensembles de paliers (4, 6) correspondants qui sont mis à disposition dans/sur le corps de boîtier principal (1) et sur la base (3) avec un obturateur amovible.

4. Dispositif à filtre selon la revendication 3, l'ensemble de paliers (4) mis à disposition dans/sur le corps de boîtier principal (1) étant monté à l'intérieur d'une extrémité supérieure du corps de boîtier principal (1) qui est une extrémité supérieure fermée.

5. Dispositif à filtre selon l'une des revendications précédentes, un autre passage d'entrée de liquide ou un autre passage de sortie de liquide étant mis à disposition dans une extension du corps de boîtier principal (1), cet autre passage communiquant avec le conduit (13).
